# EUROPÄISCHE PATENTSCHRIFT

(11) **EP 2 069 693 B1**
(45) Veröffentlichungstag und Bekanntmachung des Hinweises auf die Patenterteilung: **07.09.2016**
(21) Anmeldenummer: 07816171.8
(22) Anmeldetag: 28.09.2007
(51) Int. Cl.: F24J 2/10, F24J 2/07, F24J 2/12, F24J 2/14, F03G 6/06

(54) **STRAHLUNGSKOLLEKTOR**
RADIATION COLLECTOR
COLLECTEUR DE RAYONNEMENT

(30) Priorität: 27.09.2006 CH 15622006; 29.05.2007 CH 846072007
(43) Veröffentlichungstag der Anmeldung: 17.06.2009
(73) Patentinhaber: Airlight Energy IP SA, 6710 Biasca (CH)
(72) Erfinder: PEDRETTI-RODI, Andrea, CH-6948 Porza (CH)
(74) Vertreter: Stump, Beat
(86) Internationale Anmeldenummer: PCT/CH2007/000480
(87) Internationale Veröffentlichungsnummer: WO 2008/037108

(56) Entgegenhaltungen:
- DE-A1- 3 920 186
- DE-A1- 19 923 141
- FR-A1- 2 362 347
- US-A- 4 051 834
- US-A- 4 543 945
- US-A- 4 672 389
- US-A- 5 660 644
- US-B1- 6 373 449

## Beschreibung

Die vorliegende Erfindung betrifft einen Strahlungskollektor nach Anspruch 1. Einen Strahlungskollektor nach dem nächstrkommenden Stand der Technik offenbart das Dokument US-6 373 449 B1. Strahlungskollektoren bzw. Konzentratoren der genannten Art finden u.a. in Sonnenkraftwerken Anwendung.

Bis heute ist es wegen der noch nicht überwundenen Nachteile der Fotovoltaik nicht gelungen, Solarstrom in Anwendung dieser Technologie in annähernd kostendeckender Art zu erzeugen. Solarthermische Kraftwerke hingegen produzieren schon seit einiger Zeit Strom im industriellen Massstab zu Preisen, die - gegenüber der Fotovoltaik - nahe an den heute üblichen kommerziellen Preisen für in herkömmlicher Art erzeugten Strom liegen.

In Solarthermischen Kraftwerken wird die Strahlung der Sonne durch Kollektoren mit Hilfe des Konzentrators gespiegelt und gezielt auf einen Ort fokussiert, in welchem dadurch hohe Temperaturen entstehen. Die konzentrierte Wärme kann abgeführt und zum Betrieb von thermischen Kraftmaschinen wie Turbinen verwendet werden, die wiederum die Strom erzeugenden Generatoren antreiben.

Heute sind drei Grundformen von solarthermischen Kraftwerken im Einsatz: Dish-Sterling-Systeme, Solarturmkraftwerkssysteme und Parabolrinnensysteme.

Dish-Sterling-Systeme sind mit Paraboloidspiegeln ausgerüstet, die das Sonnenlicht auf einen Brennpunkt konzentrieren, wo ein Wärmeempfänger angeordnet ist. Die Spiegel sind zweiachsig drehbar gelagert, um dem aktuellen Sonnenstand nachgefahren werden zu können, und besitzen einen Durchmesser von wenigen Metern bis zu 10 m und mehr, womit dann Leistungen von bis zu 50 kW pro Modul erreicht werden. Ein beim Wärmeempfänger installierter Sterlingmotor wandelt die thermische Energie direkt in mechanische Arbeit um, durch die wiederum Strom erzeugt wird.

An dieser Stelle sei auf die in US-PS 4,543,945 dargestellten Ausführungsformen und die installierten Anlagen Distal und Eurodish der EU in Spanien verwiesen.

US-PS 4,543,945 zeigt in einer ersten Ausführungsform ein Bauprinzip eines Kollektors mit einer Druckzelle, bestehend aus zwei runden, aufeinanderliegenden, randseitig verbundenen Membranen, wobei die obere transparent ausgebildet und die untere mit einer reflektierenden Schicht versehen ist. Im aufgeblasenen Zustand weist die Druckzelle Linsenform auf, wobei beide Membrane sphärisch gekrümmt sind, mit der Folge, dass durch den transparenten Teil einfallende Strahlung durch die reflektierende Schicht in einen Bereich konzentriert wird, wo die Wärme abgenommen werden kann. In einer zweiten Ausführungsform wird an Stelle einer Druckzelle eine Unterdruckzelle verwendet, so dass die Membran mit der reflektierenden Schicht durch den Umgebungsdruck in sphärische Betriebsposition gebracht wird.

Die Anlagen Distal I und Distal II (1992 bzw. 1997 in Betrieb genommen) besitzen in einem Fachwerk gelagerte Konzentratoren, die als dehnbare Membrane auf dem Fachwerk aufgespannt sind und über eine Vakuumpumpe in Betriebsposition gehalten werden. Im Prinzip bildet das Fachwerk einen abgedichteten Hohlraum aus, der von der Membran überspannt wird - so wie dies bei der Membran der Trommel der Fall ist. Über den durch die Vakuumpumpe erzeugten Unterdruck wird die den Konzentrator bildende Membran in das Fachwerk eingesogen (bzw. durch den Umgebungsdruck von aussen in das Fachwerk hineingedrückt) und nimmt dann im wesentlichen sphärische, aber nahe beim Paraboloid liegende Form - die Betriebsposition - ein. Distal II besitzt einen Spiegel- bzw. einen Konzentratordurchmesser von 8,5 m.

Die Verwendung einer Membran erfolgt mit dem Vorteil des geringen Gewichts, was wiederum zum geringeren Aufwand für das Fachwerk, auf dem die Membran aufgespannt wird, führt. Verglichen mit einem konventionellen, schweren und in der Herstellung aufwendigen Spiegel ist der Konstruktionsaufwand bemerkenswert geringer. Für Systeme mit hohen Leistungen werden dann mehrere (der an sich kleinen) Kollektoren auf denselben Wärmeempfänger ausgerichtet.

FR PS 2 497 927 zeigt eine Lösung, die erlauben soll, rotationssymmetrische Kollektoren mit einem Durchmesser von 100 m oder mehr auszubilden, da der Durchmesser realisierbarer Lösungen von 8 bis 10 m Durchmesser verzehnfacht oder mehrfach verzehnfacht vergrösserbar sei. Dazu wird eine speziell aufgebaute Konzentratormembran, die vorteilhafterweise über eine Stützfläche abgestützt ist, als Bestandteil einer Druckzelle ausgebildet, die Druckzelle gegen aussen abgeschlossen und mit einem Gas leichter als Luft gefüllt, so dass der entstehende Auftrieb das Gewicht der Anordnung verringert und so die Tragstruktur leichter und damit kostengünstiger ausgebildet werden kann.

Für den Fall einer Unterdrucklösung z.B. gemäss den Distal Anlagen wird an der von der Sonne abgewendeten Seite der Unterdruckkammer eine weitere Druckkammer vorgesehen, die dann mit dem Leichtgas gefüllt ist und so zur Gewichtsreduktion beiträgt. Die Konzentrator-Membran bildet dann den vorderen Teil der Unterdruckkammer, deren hintere Membran zugleich eine Wand der mit dem Leichtgas gefüllten Überdruckkammer ist.

Für den Fall einer Überdrucklösung (wie oben durch US 4,543,945 beschrieben) schliesst sich an der Rückseite der Konzentrator-Membran ebenfalls eine zusätzliche Leichtgaskammer an.

Für den Fall, dass beide Kammern mit einem Leichtgas gefüllt sind, soll ein die beiden Kammern verbindender Ventilator intern das die Konzentratorkrümmung unterstützende Druckgefälle aufrechterhalten, welches sich sonst aufgrund der notwendigerweise zu erwartenden Undichtigkeiten in den Membranöffnungen verringert. Die Membranöffnungen wiederum erlauben den notwendigen Durchtritt von Verbindungskabeln durch die Membran hindurch, über welche das Gesamtvolumen beider Kammern verstellt werden kann, was im Fall von Temperaturänderungen des Leichtgases notwendig ist, um den Auftrieb des Konzentrators zu steuern.

Für den Fall, dass nur die hintere Kammer mit einem Leichtgas gefüllt ist, kann diese zur Befüllung mit einem externen Leichtgasreservoir verbunden werden. Wiederum werden Volumenänderungen der Kammer über Kabelzüge gesteuert. Die vordere Kammer wird über ein Gebläse mit Umgebungsluft befüllt, bis der gewünschte Überdruck erreicht ist.

Obschon der Konstruktionsaufwand bei Verwendung einer (linsenförmigen) Druckzelle gegenüber der oben erwähnten Unterdruck-Konstruktion von Distal II noch einmal vorteilhaft geringer ausfallen würde, hat die Druckzelle bis heute keine Anwendung gefunden, da bei grösseren Abmessungen die Verformbarkeit der Druckzelle, und damit des Konzentrators, z.Bsp. durch Wind, stark nachteilig ins Gewicht fällt. Verformungen des Konzentrators verringern den Wirkungsgrad der Anlage erheblich. Dieser Nachteil wäre zwar bei einer im steifen Fachwerk windgeschützt einsetzbaren Unterdruckmembran als Konzentrator grundsätzlich nicht gegeben. Die in FR PS 2 497 927 dargestellten Mittel zur Steuerung des Volumens der Druckzellen sind für Volumenänderungen aufgrund der Temperaturänderungen des Leichtgases vorgesehen und sind nicht geeignet, Volumenänderungen aufgrund von Windangriff, insbesondere Böen, abzufangen und damit einen aus einer dünnen Membran bestehenden, nicht gestützten Konzentrator ruhig zu halten. Auch aus diesem Grund ist der gezeigte Kollektors nicht realisierbar.

Dish-Sterling-Systeme sind technisch interessant, aber für die Stromproduktion im industriellen Massstab mit Nachteilen behaftet.

Solarturmkraftwerksysteme besitzen einen zentralen, erhöht (auf dem "Turm") montierten Absorber für das durch hunderte bis tausende von einzelnen Spiegeln mit zu ihm gespiegelte Sonnenlicht, womit die Strahlungsenergie der Sonne über die vielen Spiegel bzw. Konzentratoren im Absorber konzentriert und so Temperaturen bis zu 1300° C erreicht werden, was für den Wirkungsgrad der nachgeschalteten thermischen Maschinen (in der Regel ein Dampf- oder Fluidturbinenkraftwerk zur Stromerzeugung) günstig ist. Die Anlage "Solar two" in Kalifornien besitzt eine Leistung von mehreren MW.

Parabolrinnenkraftwerke besitzen Kollektoren in hoher Anzahl, die lange Konzentratoren mit geringer Querabmessung aufweisen, und damit nicht einen Brennpunkt, sondern eine Brennlinie besitzen. Diese Linienkonzentratoren besitzen heute eine Länge von 20 m bis zu 150 m. In der Brennlinie verläuft ein Absorberrohr für die konzentrierte Wärme (bis gegen 500°C), das diese zum Kraftwerk transportiert. Als Transportmedium kommt z.Bsp. Thermoöl oder überhitzter Wasserdampf in Frage.

FR-PS 1.319.144 zeigt einen Wannen- oder Rinnenkollektor für ein Parabolrinnenkraftwerk, der eine zylindrische Druckzelle mit einem transparenten Bereich und mit einem reflektierenden Bereich aufweist. Mit solch einer Anordnung ist es grundsätzlich denkbar, ein durch die zylindrische Druckzelle verlaufendes Absorberrohr entlang seiner Länge aufzuheizen. Eine weitere Ausführungsform gemäss der genannten FR-PS besitzt einen in der Druckzelle verschwenkbar angeordneten, druckbeaufschlagten flexiblen Konzentrator, damit über die Zeit u.a. dem saisonbedingt ändernden Sonnenstand Rechnung getragen werden kann. Der Konzentrator liegt mit seinen Dichtlippen verschiebbar and der Wand der zylindrischen Druckzelle an, womit seine Verschwenkbarkeit gegeben ist. Die Druckzelle besitzt damit zwei Druckzonen, die durch den Konzentrator getrennt sind. Die erreichbare Druckdifferenz zwischen den Druckzonen ist dadurch begrenzt, dass zu Gunsten der Verschwenkbarkeit des Konzentrators eine durch die Anpressung der Dichtlippen an der Wand der Druckzelle auftretende "friction ecxessive" vermieden werden soll. Wie der notwendige Druck aufgebaut und aufrecht erhalten werden soll (es besteht ein aufgrund der begrenzten Dichtfähigkeit der Dichtlippen ständiger Leck-Luftstrom durch die Druckzelle hindurch) ist nicht Thema, da ein "dispositif de pompage approprie non represente" ist.

Die zylindrische Ausbildung solch eines Rinnenkollektors ist bei den heute geforderten, oben erwähnten Abmessungen unerwünscht bzw. nicht praktikabel. Die dann gebildete äusserst grosse Angriffsfläche für z.Bsp. Wind erfordert eine Verstärkung der zylindrischen Druckzelle durch ein massives Fachwerk, wie es bereits in der genannten FR-PS im Hinblick auf verstärkende "nervures annulaires" des zylindrischen Körpers erwähnt wird. Damit aber verliert die offenbarte Ausführungsform die in der FR-PS eingangs erwähnten Vorteile betreffend leichter, transportabler und günstiger Konstruktion.

Die 9 SEGS-Parabolrinnen-Kraftwerke in Südkalifornien produzieren zusammen eine Leistung von ca. 350 MW; ein zusätzliches Kraftwerk in Nevada soll 2007 ans Netz gehen und über 60 MW liefern. Ein weiteres Beispiel für ein Parabolrinnenkraftwerk ist das im Bau befindliche Andasol 1 in Andalusien, mit einer Konzentratorfläche von 510'000 m² und 50 MW Leistung, wobei die Temperatur in den Absorberrohren ca. 400° C erreichen soll. Die Kosten werden auf mehrere hundert Millionen € veranschlagt.

Überschlagsmässig lässt sich festhalten, dass 40% oder mehr der Gesamtkosten für ein Solarkraftwerk auf die Kollektoren fallen, und dass der Wirkungsgrad des Kraftwerks entscheidend von der Qualität der Konzentratoren bestimmt wird.

Entsprechend ist es die Aufgabe der vorliegenden Erfindung, einen Strahlungskollektor zu schaffen, der die genannten Nachteile vermeidet, leicht und billig ist und z. B. auch in der Ausbildung als Rinnenkollektor bei sehr grossen Abmessungen eingesetzt werden kann.

Diese Aufgabe wird durch einen Strahlungskollektor mit den Merkmalen des Anspruchs 1 gelöst.

Dadurch, dass der Druck in den Druckräumen auch bei Änderung des Volumens eines oder beider der Druckräume gehalten wird, bleibt die Lage des dem Druck ausgesetzten Reflektors, und damit dessen Funktion, unbeeinträchtigt, was die Problematik des Windangriffs mit den nicht vermeidbaren Verformungen des Kollektors entscheidend entschärft.

Dies gilt dann, wenn insbesondere grosse Kollektoren für Solarturmkraftwerke vorgesehen sind, also auch eben aufgespannte Reflektoren grosser Fläche besitzen können, wie auch dann, wenn insbesondere grosse Kollektoren für Parabolrinnenkraftwerke vorgesehen sind, deren ebenfalls grosse Kollektoren mit ihren Aussenflächen (i) dank ihrer Grösse wie auch (ii) strömungstechnisch aufgrund ihrer konvex gerundeten Form für den Windangriff empfindlich sind. Dasselbe gilt ebenfalls für Kollektoren, wie sie für Dish-Sterlingsysteme Verwendung finden, wo die zwar kleineren Abmessungen zu leichterer (und günstigerer) Konstruktion, und damit verringerter Widerstandsfähigkeit, führen. Bei einer bevorzugten Ausführungsform ist ein Strahlungskollektor mit einer mindestens teilweise aus einer flexiblen Membran gebildeten Druckzelle, die einen für zu konzentrierende Strahlung transparenten Bereich aufweist, vorgesehen, mit einem in der Druckzelle fest angeordneten, eine flexible, fluiddichte Membran aufweisenden Konzentrator, der eine dem transparenten Bereich zugewendete, die Strahlung reflektierende Seite und eine der Strahlung abgewandte Seite aufweist und pneumatisch durch auf der reflektierenden Seite herrschenden Druck in Strahlung konzentrierender Betriebsposition gehalten wird, wobei der Konzentrator die Druckzelle in einen 1. Druckraum mit höherem Betriebsdruck und in einen 2. Druckraum mit geringerem Betriebsdruck teilt, und wobei Mittel vorgesehen sind, in den Druckräumen betriebsfähig Drücke von vorbestimmter Differenz zu erzeugen und aufrecht zu erhalten, wenn im Betrieb das Volumen eines oder beider Druckräume durch äussere Einflüsse verändert wird.

Dadurch, dass bei dieser bevorzugten Ausführungsform der Konzentrator fest und fluiddicht in der Druckzelle angeordnet ist, sind der erste und der zweite Druckraum fluiddicht ausgebildet, mit der Folge, dass ein einmal aufgebauter Druck aufrechterhalten bleibt und dass auch ein sehr kleiner Differenzdruck zwischen den beiden Druckräumen ohne grossen Regelungsaufwand konstant gehalten werden kann. Dadurch, dass der Differenzdruck auch bei einer Veränderung des Volumens eines Druckraums aufrechterhalten bleibt, bleibt auch die Betriebsposition des Konzentrators unverändert, z.Bsp. auch dann, wenn Winde an der Oberfläche der Druckzelle angreifen und diese verformen, was in der Regel eine Volumenänderung des betroffenen Druckraums zur Folge hat. Es ist mit anderen Worten so, dass die Druckzellen verformende äussere Einflüsse die Funktion des Kollektors nicht mehr beeinträchtigen.

Bei einer besonders bevorzugten Ausführungsform ist es über die gestellte Aufgabe hinaus möglich, eine als Konzentrator wirkende, reflektierende Membran zu verwenden, die aufgrund des im nicht vorhandenen (für ein Solarturmkraftwerk geeignete Ausführungsform, s. oben) oder des geringen Differenzdrucks (für alle Kraftwerke geeignete Ausführungsform) vergleichsweise wenig beansprucht wird und entsprechend ausgebildet werden kann. Gegenüber konventionellen Konzentratoren geringere Beanspruchung bedeutet geringere Dehnung des Konzentrators in Betriebsposition und damit geringe Beanspruchung der reflektierenden Schicht, die in der Regel spröde ist (so z.Bsp. eine auf eine aus Mylar bestehenden Membran aufgedampfte Aluminiumschicht). Ein wesentlicher Anteil der bei grösserer Dehnung anfallenden Mikrorisse in der reflektierenden (Aluminium)schicht entfällt, was das Reflexionsvermögen des Konzentrators verbessert und damit auch den Wirkungsgrad des Kraftwerks. Zudem kann die Membran ohne oder mit weniger Verstärkungen, wie z.Bsp. Faserverstärkungen, ausgebildet werden, besitzt dann eine wesentlich glattere Oberfläche, was das Reflexionsvermögen des Konzentrators noch einmal vorteilhaft verbessert.

Bei einem weiteren, besonders bevorzugten Ausführungsbeispiel nach Anspruch 6 werden die Druckräume über Fluidkanäle in denen die Luft in beide Richtungen fliessen kann, mit Druckluft beaufschlagt, und in denen Ventilatoren zur Erzeugung von Druck vorgesehen sind. Einmal ermöglicht dies, den Druck im zugeordneten Druckraum durch konstante Drehzahl des Ventilators auch bei einem gegenüber der Aussenwelt (oder anderem Druckniveau) offenen Kanal aufrecht und konstant zu halten. Der gegenüber der Aussenwelt offene Kanal wiederum stellt sicher, dass bei plötzlicher Volumenverkleinerung des Druckraums, z.Bsp. durch einen Windstoss, ein entsprechender Teil des im Druckraum gefangenen Fluida in die Aussenwelt entweichen kann, während der Druck dank des weiterhin drehenden Ventilators nicht oder nur sehr kurzfristig unter den Sollwert fällt. Ebenso im Fall der Volumenzunahme des Druckraums, wo bei entsprechender Auslegung durch den Fachmann durch den Ventilator genügend Luft nachgeschöpft werden kann, um den Solldruck stets aufrecht zu erhalten.

Zusätzliche Ausführungsformen der vorliegenden Erfindung sind in den abhängigen Ansprüchen beschrieben.

Die Erfindung wird anhand der Figuren nachstehend näher erläutert.

Es zeigt:
- Fig. 1: schematisch einen erfindungsgemässen Strahlungskollektor am Beispiel eines Sterlingsystems im Querschnitt
- Fig. 2: eine weitere Ausführungsform des Kollektors von Figur 1 am Beispiel eines Rinnenkollektors,
- Fig. 3: eine Ansicht des Kollektors von Figur 2
- Fig. 4: das Schema eines erfindungsgemässen Kollektors mit einer Anordnung zur Zuführung von Druck-Fluid,
- Fig. 5: schematisch eine weitere Ausführungsform des erfindungsgemässen Strahlungskollektors im Querschnitt, geeignet zur Ausbildung eines angenähert parabolisch gekrümmten Konzentrators
- Fig. 6: eine besondere Ausführungsform des Kollektors von Fig. 5
- Fig. 7: eine weitere Ausführungsform eines erfindungsgemässen Kollektors mit peripheren Stützringen
- Fig. 8: die Druckzelle des Kollektors nach Fig. 7 in einer Ansicht von unten, und
- Fig. 9: die Druckzelle des Kollektors nach Fig. 7 in einer Ansicht von oben.

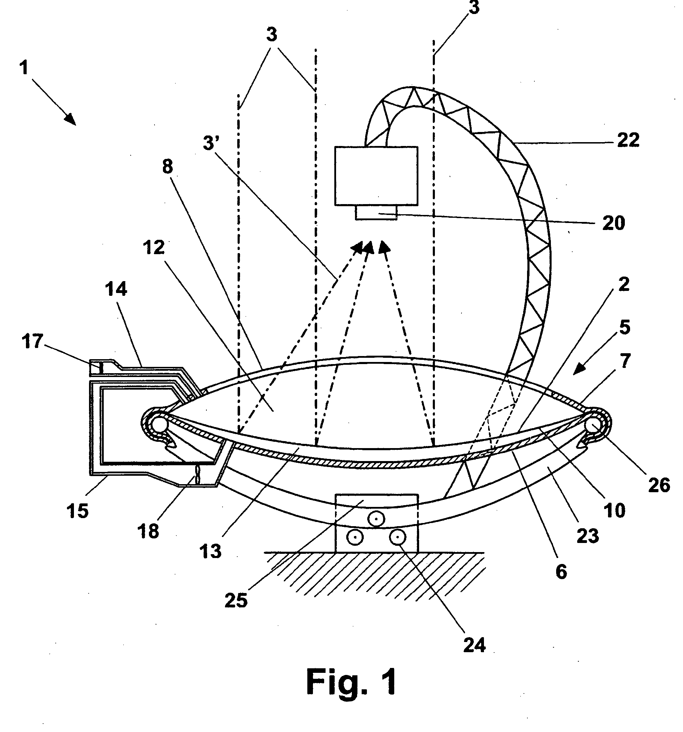

Figur 1 zeigt einen Strahlungskollektor 1 im Querschnitt, der für z.Bsp. ein Dish-Sterling-System geeignet ist und im Folgenden einfach "Kollektor 1" genannt wird.

Der Kollektor 1 besitzt einen als fluiddichte Membran ausgebildeten Konzentrator 2 aus flexiblem Material, z.Bsp. aus Mylar. Eine Strahlung 3 (hier Sonnenstrahlung) reflektierende Seite 4 des Konzentrators 2 besitzt zu diesem Zweck beispielsweise eine aufgedampfte oder auflaminierte Aluminiumschicht. Verwendbar ist jedes geeignete Material, das die notwendigen Reflektionseigenschaften besitzt. Die der Strahlung abgewandte Seite des Konzentrators 2 ist mit 10 bezeichnet, die durch die reflektierende Seite 4 reflektierte Strahlung mit 3'.

Der Konzentrator 2 befindet sich fest angeordnet in einer Druckzelle 5, gebildet aus einer mindestens teilweise flexiblen Membran. In der gezeigten Ausführungsform besitzt die Druckzelle im Betrieb 5 linsenförmige Kontur mit rundem Umriss und besteht aus einer unteren flexiblen Membranfläche 6 und einer oberen flexiblen Membranfläche 7, die einen für zu konzentrierende Strahlung 3 transparenten Bereich 8 aufweist. Der Konzentrator verläuft zwischen den beiden Membranflächen 6,7 bis zur Randzone der Druckzelle 5 hin, wobei durch die vorgesehene Druckverteilung der erste Druckraum 12 konvex und der zweite Druckraum 13 konkav geformt ist.

Die Membrane 6,7 bestehen aus PVC-, PU- oder Silikon-beschichtetem Textilen Gewebe, wie Polyestergewebe oder Fiberglasgewebe oder einem anderen geeigneten Material. Die oben genannten Komponenten können auch geeignet kombiniert werden. Textile Gewebe der genannten Art sind z.Bsp. unter dem Namen Precontraint^{®}1002/1202/1302 von FERRARI oder ATEX 3000 von Interglass bekannt.

Vorzugsweise wird für den transparenten Bereich 8 bzw. für die obere flexible Membran 7 als Material ETFE (Ethylene TetrafluoroEthylene) oder Mylar^{®} verwendet.

Grundsätzlich geeignet sind ETFE Folien mit 100 bis 200 micron Dicke. ETFE ist sehr lichtdurchlässig und sehr resistent gegen UV-Strahlung und Witterung. Ebenfalls geeignet sind hochfeste, durchsichtige Polyethylenfolien oder andere durchsichtige Materialien. Die Dicke der Membran 6,7 kann minimiert werden, wenn diese mit einem weitmaschigen, dünnen Stahl- oder Kunststoffnetz überspannt wird, das in Betriebsposition die Beanspruchung durch den in der Druckzelle 5 herrschenden Fluiddruck ableitet.

Der Konzentrator 2 teilt die Druckzelle 5 in einen ersten Druckraum 12 mit höherem Betriebsdruck und einen zweiten Druckraum 13 mit geringerem Betriebsdruck. Durch diese Druckdifferenz wird der Konzentrator 2 pneumatisch in Strahlung konzentrierender Betriebsposition, wie in der Figur dargestellt, gehalten.

Ein erster Fluidkanal 14 mündet in den ersten Druckraum 12, ein zweiter Fluidkanal 15 mündet in den zweiten Druckraum 13; wobei durch beide Fluidkanäle zur Aufrechterhaltung eines Sollbetriebsdrucks ein Fluid, hier Luft, in beide Richtungen fliessen kann. Jeder Fluidkanal 14,15 ist mit einer bevorzugt als Ventilator 17,18 ausgebildeten Fluidpumpe versehen.

Bei bestimmungsgemässem Betrieb der Ventilatoren 17,18 baut sich im ersten Druckraum 12 Druck auf, wobei gleichzeitig Luft durch den Kanal 15 in den zweiten Druckraum gelangt. Der Ventilator 17 wird über eine geeignete Regelung, die z.Bsp. Drucksensoren aufweist, derart angesteuert, dass der Druck im ersten Druckraum 12 den Sollwert erreicht, der in einem Bereich von 1 bis 5 mbar, vorzugsweise 2 bis 5 mbar und besonders bevorzugt in einem Bereich von 3 bis 4 mbar liegt. Der Ventilator 18 wird durch eine zweite Regelung, die ebenfalls Drucksensoren aufweisen kann, derart angesteuert, dass der Druck im zweiten Druckraum 13 geringer ist, wobei der dann zum ersten Druckraum 12 bestehende Differenzdruck kleiner ist als 0.5 mbar, vorzugsweise in einem Bereich von 0.05 bis 0.2 mbar, und besonders bevorzugt im Bereich von 0.05 bis 0.1 mbar liegt. Die Regelungseinrichtungen sowie der Antrieb der Ventilatoren können vom Fachmann leicht bestimmt und ausgelegt werden und sind deshalb zur Entlastung der Figur weggelassen und auch nicht näher beschrieben.

Durch diese Druckwerte wird erreicht, dass einerseits die unter Solldruck stehende Druckzelle 5 zwar genügend steif ist, um betriebsfähig in einem Kraftwerk eingesetzt zu werden, aber durch die Belastung (die bei 5 mbar Druck, d.h. 50 kg/m, immerhin ca. 750 kg/m erreicht) die Festigkeit der oben genannten Membranmaterialien für Kollektoren mit 8 bis 15 m Durchmesser nicht überschritten wird.

Andererseits ist der vorbestimmte Differenzdruck, der den Konzentrator 2 in Betriebsposition hält, signifikant kleiner, mit der Folge, dass eine dünnere Membran verwendet werden kann und zugleich deren Dehnung kleiner ist, was wiederum die reflektierende Beschichtung schont bzw. eine qualitativ verbesserte Beschichtung erst ermöglicht, und so, wie oben beschreiben, beiträgt, den Wirkungsgrad des Kollektors und damit des Kraftwerks spürbar zu erhöhen. Zudem kann durch kleine Variationen des Soll-Differenzdrucks (hier über die geeignete Änderung der Ventilatordrehzahl) die Krümmung des Konzentrators 2 und damit dessen Brennpunkt sehr genau eingestellt werden, so dass auch kleine Dehnungsänderungen der Konzentratormembran infolge Temperatur, Feuchtigkeit, Alterung etc. einfach, schnell und genau kompensierbar sind.

Die Fluidkanäle 14, 15 stellen zusammen mit den Ventilatoren 17,18 Mittel dar, um in den in den Druckräumen 12,13 betriebsfähig einen vorbestimmten Differenzdruck zu erzeugen und weiter aufrecht zu erhalten, wenn im Betrieb das Volumen eines oder beider Druckräume 12,13 durch äussere Einflüsse verändert wird:
Obschon, wie oben erwähnt, die unter Solldruck stehende Druckzelle 5 eine gewisse Steifigkeit aufweist, verhält sie sich unter z.Bsp. Winddruck nicht starr, sondern der Natur der Sache nach flexibel, mit der Folge, dass sich das Volumen der Druckzelle 5 und damit eines oder beider Druckräume 12,13 verändern kann. Eine Verkleinerung z.Bsp. des zweiten Druckraums 13 müsste in diesem zu einer Druckzunahme und schliesslich zu einer Lageänderung des Konzentrators führen. Es ist mit anderen Worten so, dass der im Hinblick auf die erreichbaren Eigenschaften des Konzentrators 2 vorteilhaft geringe Differenzdruck in dieser Situation nachteilig ist, und zu einer labilen Lagestabilisierung des Konzentrators 2 führt, was wiederum den Wirkungsgrad des Kollektors herabsetzen kann. Durch die dargestellte Anordnung des Fluidkanals 15 mit dem Ventilator 18 wird jedoch dieser negative Effekt verhindert.

Im Fall eines Windangriffs auf die untere flexible Membran 6 wird Luft aus dem zweiten Druckraum 13 verdrängt, und fliesst (in Ventilator-Wirkrichtung) in den ersten Druckraum 12. Durch geeignete Ansteuerung des Ventilators 18 bleibt der Soll-Differenzdruck aufrechterhalten. Stellt sich das ursprüngliche Volumen im Druckraum 13 wieder her, fliesst entsprechend Luft entgegen der Ventilator-Wirkrichtung zurück. Auch dann, wenn sich aufgrund des Windangriffs kurzfristig Schwankungen im Differenzdruck ergeben, fallen dies erheblich kleiner und vor allem gedämpft aus, als es ohne den in der dargestellten Art funktionierenden Fluidkanal 15 möglich wäre. Es ergibt sich, dass ein Solarkraftwerk bei ungünstigem Wetter den Betrieb von aus flexiblem Material bestehenden Kollektoren mit der vorliegenden Konfiguration länger aufrecht erhalten kann.

Der Ventilator 18 hält den Differenzdruck stets aufrecht, auch ohne Störung durch äussere Einflüsse. Da durch den zweiten Fluidkanal 15 eine offene Verbindung zwischen den Druckräumen 12 und 13 besteht, würde ohne laufenden Ventilator 18 ein unerlaubter Druckausgleich stattfinden. Im "statischen" d.h. ungestörten Betriebszustand steht die im Fluidkanal 15 sich befindende Luftsäule bei laufendem Ventilator 18 still, der Soll-Differenzdruck besteht unverändert fort.

Durch den Fluidkanal 14, der mit der Aussenwelt in Verbindung steht, wird auf dieselbe Weise über den Ventilator 17 der Solldruck im ersten Druckraum 12 aufrecht erhalten bzw. bei Verformung der oberen flexiblen Membran 17 durch z.Bsp. Windangriff auf den Sollwert geregelt.

Diese offene Ausführung des Fluidkanals 14 (sowie des Kanals 15) mit als ständig laufendem Ventilator ausgebildeter Fluidpumpe stellt zugleich einen Überdruckausgleich für den ersten Druckraum 12 (und den zweiten Druckraum 13) dar: Durch wechselnde Tagestemperaturen und wechselnde Sonneneinstrahlung herrschen im Inneren der Druckzelle 5, insbesondere im ersten Druckraum 12, wechselnde Temperaturen, die bei abgeschlossener Druckzelle 5 zu Druckschwankungen führen könnten, die die Membrane 6,7 bzw. den Konzentrator 2 beschädigen. Mit einer stets offenen Verbindung zur Aussenwelt ist diese Gefahr gebannt, kann doch Überdruck auch im Gegenstrom gegen den laufenden Ventilator 17 (oder auch 18) entweichen. Zudem wird bei Abkühlung im ersten Druckraum 12 die für den Solldruck notwendige Luft aufgrund des ständig laufenden Ventilators 17 nach Bedarf in diesen hinein gefördert. Mit anderen Worten ist es so, dass in den Fluidkanälen die Luft in beiden Richtungen fliesst, je nach dem, was notwendig ist, damit im zugeordneten Druckraum 12,13 der Sollbetriebsdruck herrscht.

Bei einer weiteren Ausführungsform ist an Stelle eines Fluidkanals 15 eine Öffnung im Konzentrator 2 selbst vorgesehen, die einen Ventilator (oder eine andere, dieselbe Funktionalität aufweisende Fluidpumpe) aufweist. Vorteilhafterweise ist dann die Öffnung im Schatten des Wärmeempfängers 20 (s. unten) angeordnet.

Je nach Zuschnitt der Konzentrators 2 nimmt dieser unter Betriebsdruck bzw. Soll-Differenzdruck eine sphärische oder eine angenähert paraboloide Form ein und befindet sich in Betriebsposition, so dass durch die druckbedingte sphärische oder paraboloiden Ausbildung die einfallenden Sonnenstrahlen 5 in einen Brennpunktbereich reflektiert werden, in welchem wiederum ein Wärmeempfänger 20 angeordnet ist.

Der aus flexiblem Material, vorzugsweise einer Membran bestehende Konzentrator 2 kann einstückig ausgebildet oder aus mehreren Abschnitten zusammengefügt sein. Im Fall der einstückigen Ausbildung wird unter dem Soll-Differenzdruck eine gewisse Dehnung des an sich zugresistenten Konzentratormaterials erfolgen, so dass sich eine sphärische Betriebsposition d.h. diejenige einer sphärische Kalotte ergibt. Werden mehrere Abschnitte verwendet, kann die Betriebsposition vorbestimmt werden, indem der Zuschnitt der verschiedenen Abschnitte auf die sphärische oder paraboloidische Form abgestimmt wird.

Mit dem Wärmeempfänger 20 zusammengeschaltet ist (im Fall des Dish-Stirling-Systems) ein Stirlingmotor 21, wobei Wärmeempfänger 20 und Motor 21 zusammen an einem Arm 22 aufgehängt sind, der wiederum an einem Rahmenteil 23 des Kollektors 1 fest abgestützt ist, derart, dass bei einer Verschwenkung des Kollektors 1 zum Verfolgen des Sonnenstands der Wärmeempfänger 20 stets im Brennpunktbereich des Konzentrators 2 verbleibt.

Der gebogen ausgebildete Rahmenteil 23, an welchem die Druckzelle 5 ihrem Randbereich entlang aufgehängt ist, kann Doppel-T-Träger ausgebildet sein, so dass Rollen 24' eines Verschwenkantriebs 25 den Kollektor 1 zum Verfolgen des Sonnenstandes geeignet verschwenken können. Die Ausbildung von geeigneten Verschwenkantrieben für Sonnenkollektoren in zwei Richtungen ist dem Fachmann bekannt, so z.Bsp. aus den Anlagen Dish und Eurodish, so dass es vorliegend bei der schematischen Abbildung für die Verschwenkung in nur einer Richtung bleiben kann.

Besonders bevorzugt besteht der Rahmen im Wesentlichen aus Beton bzw. vorgefertigten Betonelementen, wie dies weiter unten näher beschrieben ist.

Die aufeinandergelegten und miteinander verbundenen Ränder der unteren flexiblen Membran 6 und der oberen flexiblen Membran 7 sowie des Kollektors 2 sind um einen Stützring 26 herumgeschlungen und an ihm auf geeignete, durch den Fachmann ausführbare Art festgelegt. Ebenso ist der Stürzring 26 auf konventionelle Art am Rahmenteil 23 festgelegt.

Im Ergebnis steht ein gegenüber konventionellen Spiegeln wesentlich leichterer Konzentrator 2 zur Verfügung, was erlaubt, die Konstruktion des Kollektors 1 als solchen erheblich zu vereinfachen, somit günstiger auszuführen.

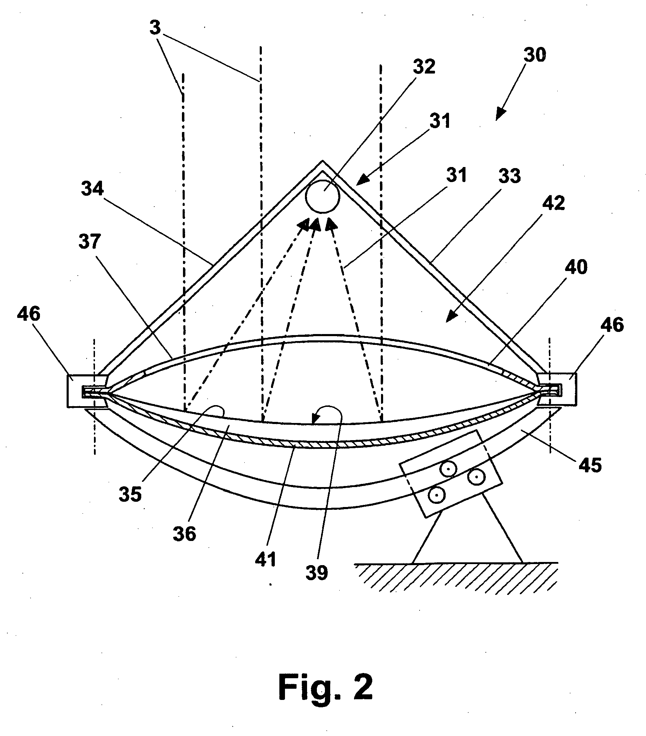

Fig. 2 zeigt den Querschnitt eines erfindungsgemässen Wannen- oder Rinnenkollektors 30. In einem durch die reflektierten Strahlen 5' gebildeten Brennlinienbereich 31 befindet sich ein Absorberrohr 32 für die konzentrierte Strahlungsenergie, das an einem Gestell mit Stützen 33 und 34 aufgehängt ist.

Ein im Wesentlichen rechteckig ausgebildeter Konzentrator 35 wird durch den Differenzdruck in betriebsfähiger Position gehalten, wobei der Solldruck im ersten Druckraum 36 grösser ist als im zweiten Druckraum 37. Zur Entlastung der Figur sind die Mittel, um in den Druckräumen 36,37 betriebsfähig einen vorbestimmten Differenzdruck zu erzeugen und aufrecht zu erhalten, nicht dargestellt, da sie in derselben Art ausgebildet sind, wie in Figur 1 dargestellt (s. Kanäle 14,15 und Ventilatoren 17,18).

Durch den Differenzdruck wird der im wesentlichen rechteckig ausgebildete Konzentrator 35 im Querschnitt sphärisch oder annährend paraboloid gewölbt, mit längs parallel verlaufenden Mantellinien, so dass die auf ihm aufgebrachte reflektierende Schicht 39 die Strahlen 3 derart reflektiert, dass sich diese im Brennlinienbereich 31, und diesem entlang, konzentrieren. Der Konzentrator 35

Die strahlungsdurchlässige (oder: in Anbetracht des verwendeten Materials möglichst strahlungsdurchlässige) obere flexible Membran 40 bildet zusammen mit der unteren, flexiblen Membran 41 eine kissenförmige, rechteckige Druckzelle 42, in welcher der Konzentrator 35 fluiddicht und fest angeordnet ist und zwischen den oberen und unteren Membranen bis hin zur Randzone des Kollektors verläuft. Die Druckzelle 42 wird durch den Konzentrator 35 in einen ersten, konvex geformten und einen zweiten, konkav geformten Druckraum geteilt.

Die Druckzelle 42 ist auf einem Gestell 45 über einen Rahmen 46 gelagert, z.Bsp durch eine zur Entlastung der Figur nicht dargestellte Verschraubung, die die übereinanderliegenden Ränder des Konzentrators 35 und der flexiblen Membrane 40,41 fixiert.

Der grundsätzliche Aufbau, einschliesslich der notwendigen Bewegungsfähigkeit eines Wannen- oder Rinnenkollektors 30 ist dem Fachmann bekannt, z.Bsp. aus den Anlagen SEGS in Kalifornien.

Aufgrund der Eingangs erwähnten grossen Abmessungen (Länge bis zu 150m oder mehr) besitzt die durch den erfindungsgemässen Kollektor 30 erreichte Gewichts- und Kostenreduktion Bedeutung. Überschlagsweise kann abgeschätzt werden, dass das Gewicht von 30 kg/m² pro m² Konzentratorfläche auf 10 kg/m² reduziert werden kann, wobei die entsprechende Kostenreduktion 50% beträgt, d.h. von heute 60 $/ m² auf 30 $/ m² sinken dürfte. Diese Verhältnisse treffen auch auf die anderen Ausführungsformen gemäss der vorliegenden Erfindung zu.

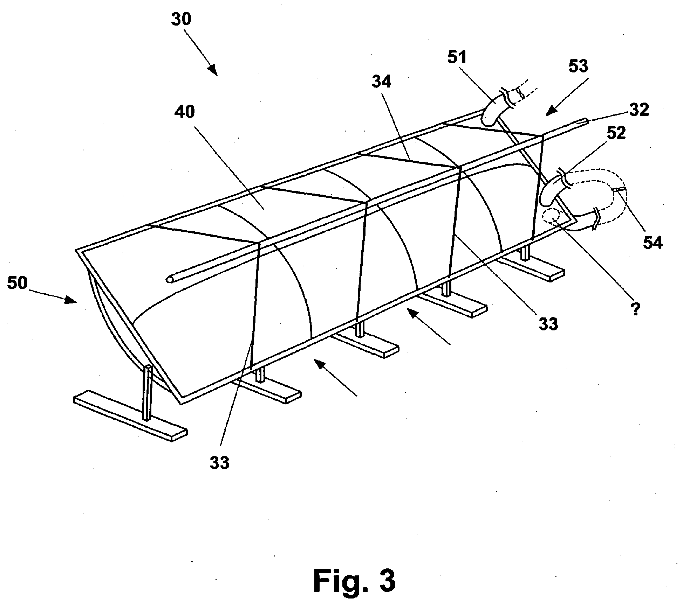

Figur 3 zeigt zur Verdeutlichung der Verhältnisse eine Ansicht des Wannenoder Rinnenkollektors 30 seitlich von oben. Die Druckzone, bestehend aus den Druckräumen 36,37 (Figur 2) besitzt demgemäss die Gestalt eines langen, rechteckigen Kissens.

Demgegenüber ist es auch möglich, durch entsprechenden Zuschnitt einen Konzentrator auszubilden, der an den Seiten 62 halbmondförmige Seitenwände besitzt, so dass die Überdruckzone die Gestalt eines Zylinderabschnittes mit etwa parallelen Seitenwänden besitzt. Die Kissenform ist aber vorteilhaft, um früh am morgen oder spät gegen den Abend schräg einfallendes Sonnenlicht, das auf den Seiten 50 in den Kollektor 30 einfällt, wenigstens teilweise noch in den Brennlinienbereich 31 (Figur 2) zu lenken.

Ein Fluidkanal 51, der funktional dem Kanal 14 (Figur 1) entspricht ist in der Figur angedeutet, ebenso ein Fluidkanal 52, der funktional dem Kanal 15 (Figur 1) entspricht. Ebenso angedeutet sind als Ventilatoren ausgebildete Fluidpumpen 53,54 die dieselbe Funktionalität besitzen wie die Ventilatoren 17,18 von Figur 1. Zur Funktionsweise wird entsprechend auf die Erläuterung zu Figur 1 verwiesen.

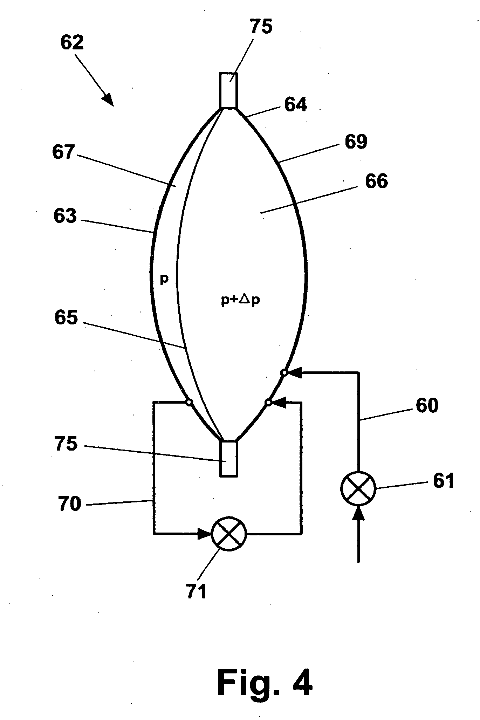

Figur 4 zeigt zur Verdeutlichung der Verhältnisse einen Querschnitt durch eine Druckzelle 5 bzw. 42 mit schematisch eingezeichneten Fluidkanälen und Fluidpumpen, die die erfindungsgemässe Funktion sicherstellen.

Eine im Fluidkanal 60 angeordnete erste Fluidpumpe 61 erzeugt in der Druckzelle 62, bestehend aus einer unteren, flexiblen Membran 63 und einer oberen, flexiblen Membran 64 mit einem transparenten Bereich 69, Fluiddruck. Die Druckzelle 62 ist durch den Konzentrator 65 in einen ersten Druckraum 66 und einen zweiten Druckraum 67 unterteilt. Die Druckräume 66,67 sind über einen Fluidkanal 70 miteinander verbunden, wobei sich in diesem Kanal eine zweite Fluidpumpe 71 befindet, die ausgebildet ist, ein Fluid vom Druckraum 67 in den Druckraum 66 zu pumpen.

Im Betrieb wird die Pumpwirkung der Fluidpumpe 71 gegenüber derjenigen der Fluidpumpe 70 derart eingestellt, dass sich im Druckraum 66 ein den Fluiddruck p + Δp und im Druckraum 67 ein Fluiddruck p aufbaut und hält. Der Differenzdruck Δp wirkt auf den Konzentrator 65 und hält diesen in Strahlung konzentrierender Betriebsposition.

In beiden Kanälen 60, 70 kann das Fluid in beiden Richtungen fliessen, so dass ein Druckausgleich aufgrund von Verformungen der Druckräume 66,67 bzw. Temperaturschwankungen (der Druckraum 66 ist der Sonne ausgesetzt, der Druckraum 67 in der Regel nicht) stets stattfinden kann. Die Fluidpumpen, vorzugsweise Ventilatoren, sind entsprechend angesteuert.

Weiter dargestellt ist in der Figur ein Rahmen 75, in welchem die Druckzelle 62 eingespannt ist. Dieser Rahmen (ebenso der Rahmen 20, Figur 1 und der Rahmen 46, Figur 2) besteht vorzugsweise und überraschend aus einer Betonkonstruktion. Bei den in der Beschreibung zu Figur 2 erwähnten Abmessungen eines Rinnenkollektors würde eine Stahlkonstruktion für den Rahmen bei genügender Steifigkeit von den Materialkosten und vom Gewicht her gegenüber einer Rahmenkonstruktion von z.Bsp. vorgefertigten Betonelementen nachteilig sein. Solarkraftwerke werden vorzugsweise in einer Wüste oder sonstigen, entlegenen Regionen erstellt. Materialtransporte, hier für einen Stahlrahmen der notwendigen Grösse, sind aufwendig. Eine Betonkonstruktion kann praktisch überall vor Ort hergestellt werden.

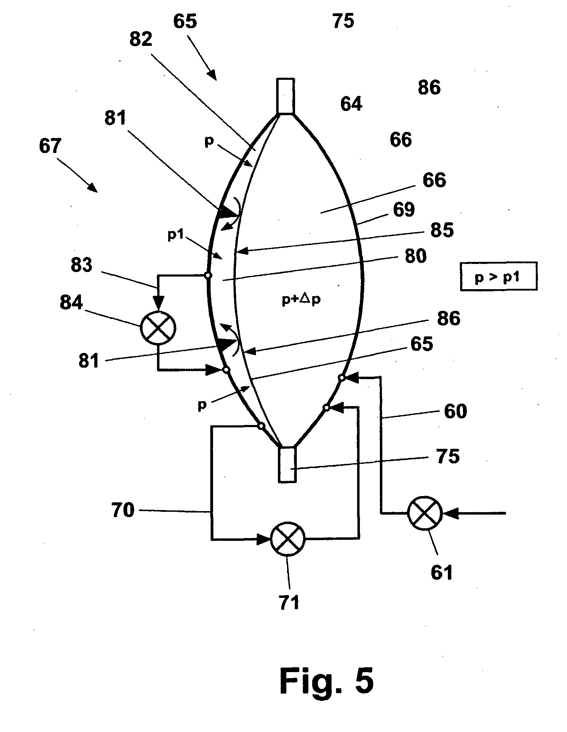

Figur 5 zeigt eine weitere Ausführungsform des erfindungsgemässen Strahlungsollektors in der schematischen Darstellung des Kollektors von Figur 4. Gleiche Elemente sind mit den gleichen Bezugsziffern bezeichnet.

Der zweite Druckraum 67 weist eine zentral gelegene Kernzone 80 auf, die durch als Dichtungsanordnung 81 ausgebildete Mittel von den sonstigen Bereichen 82 des ersten Druckraums 67 getrennt sind. Durch diese Mittel kann in der Kernzone 80 betriebsfähig ein pneumatischer Druck aufrecht erhalten werden, der geringer ist als der Druck in den sonstigen Bereichen 82 des zweiten Druckraums 67. Die Kernzone 80 ist mit den sonstigen Bereichen 82 über einen Fluidkanal 83 verbunden, wobei der Fluidkanal 82 eine Fluidpumpe 84 aufweist. Die Fluidpumpe 84 ist wiederum vorzugsweise als Ventilator ausgebildet, der in einem offenen Kanal 83 angeordnet ist und ein Druckgefälle zwischen der Kernzone 80 und den sonstigen Bereichen 82 erzeugt, derart, dass in der Kernzone ein Druck p1 herrscht, der geringer ist als der Druck p in den sonstigen Bereichen 82, wobei der Druck p, wie erwähnt, um Δp geringer ist als der Druck im ersten Druckraum 66. Mit anderen Worten ist es so, dass Fluid zur Verminderung des pneumatischen Drucks in der Kernzone aus dieser hinaus fliessen kann.

Der Druck p1 bewirkt, dass im Betrieb der Konzentrator 65 in seinem Zentrum etwas stärker gekrümmt wird als in seinen äusseren Randbereichen, mit der Folge, dass er mehr parabolisch als sphärisch gekrümmt wird, sich entsprechend die Strahlung verbessert konzentriert und sich damit der Wirkungsgrad des Kollektors noch einmal erhöht.

Die Kernzone befindet sich also in dem Gebiet des Konzentrators 65, in dem dessen stärkste Krümmung gewünscht wird. Im Fall des runden Kollektors in seinem Zentrum, im Fall des Rinnenkollektors entlang seiner mittleren Mantellinie.

Auch bei dieser Ausführungsform kann der Fachmann die notwendige Druckregelung über den Ventilator der Fluidpumpe 84 in konventioneller Weise entwerfen. Auch hier kann im Fall äusserer Einflüsse ein Druckausgleich (teilweise im Gegenstrom zu den Ventilatoren) stattfinden, wie es in der Beschreibung zu den Figuren 1 und 4 erwähnt ist.

Vorzugsweise besitzt die Dichtungsanordnung eine Dichtungslippe, die betriebsfähig mit dem Konzentrator 65 zusammenwirkt, also genügende Abdichtung zwischen der Kernzone 80 und den sonstigen Bereichen 82 bewirkt, ohne den Konzentrator 65 z.Bsp. mechanisch zu beeinträchtigen.

In dieser Hinsicht besonders bevorzugt ist eine Dichtungsanordnung, deren Dichtungslippe im Betrieb einen geringen Abstand zum Konzentrator aufweist, so dass jede mechanische Beeinträchtigung entfällt. Ebenso kann zur Vermeidung einer mechanischen Beeinträchtigung ein halbdurchlässiger Schaumstoffstreifen als Kontaktelement mit dem Konzentrator 65 vorgesehen werden. Im Fall des Abstands der Dichtungslippe bzw. des halbdurchlässigen Schaumstoffstreifens sind jedoch der Luftspalt bzw. der Schaumstoff derart zu bemessen, dass die aus den umgebenden Bereichen in die Kernzone nachströmende Fluidmenge kleiner ist als die Fluidmenge, die durch die Fluidpumpe 84 gefördert werden kann.

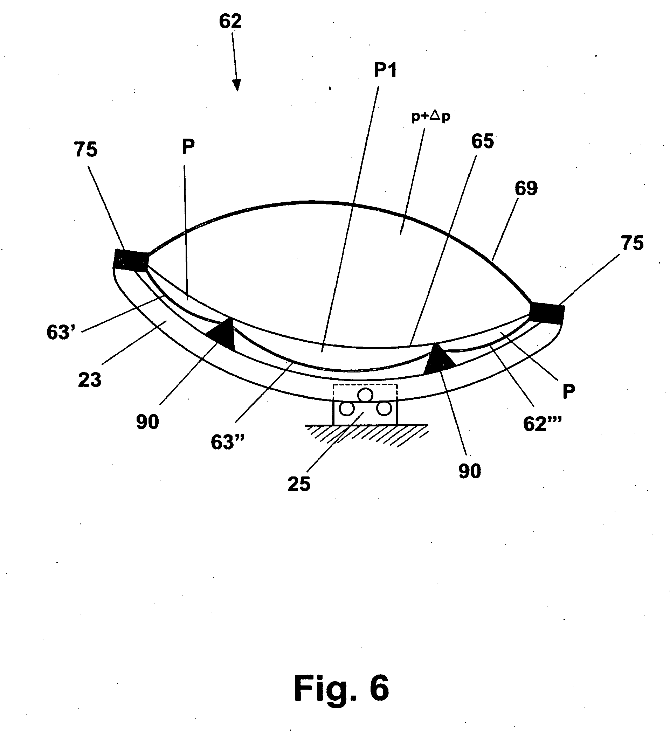

Figur 6 zeigt eine weitere Ausführungsform des erfindungsgemässen Strahlungsollektors von Figur 5. Gleiche Elemente sind wiederum mit den gleichen Bezugsziffern bezeichnet.

Die Fluidkanäle 60,70 (Figur 5) sind zur Entlastung der Figur weggelassen.

Näher dargestellt ist eine besondere Ausführungsform der Mittel, in der Kernzone 80 betriebsfähig einen pneumatischen Druck aufrecht zu erhalten, der geringer ist als der Druck in den sonstigen Bereichen 82 des zweiten Druckraums 67. Auf einem Rahmenteil 23 (s. auch Figur 1) ist eine Dichtungsanordnung 90 abgestützt, die mit den Abschnitten 63', 63", 63"' der unteren, flexiblen Membran der Druckzelle 62 fluiddicht verbunden sind. Die mit dem Konzentrator 65 zusammenwirkenden Elemente der Dichtung 90 sind vorzugsweise gleich ausgebildet, wie dies in der Beschreibung zu Figur 5 erwähnt ist, besitzen z.Bsp. Dichtungslippen bzw. halbdurchlässige Schaumstoffstreifen.

Dadurch, dass die Dichtungsanordnung 90 nicht auf der unteren, flexiblen Membran 63 (Figur 5), sondern auf dem Trägerteil 23 abgestützt ist, ergibt sich eine verbesserte Stabilität der Druckzelle 62.

Die anhand der Figuren beschriebenen Ausführungsformen besitzen einen druckbeaufschlagten Konzentrator, somit unterschiedliche Drücke in den entsprechenden Druckräumen. Werden Kollektoren für Solarturmkraftwerke eingesetzt, ist eine Krümmung des Konzentrators nicht zwingend notwendig, da der Turm sich in vergleichsweise grosser Entfernung befindet. Ebene oder plane Spiegel werden in solchen Kraftwerken durchaus verwendet.

Wird nun in den in den Figuren gezeigten Ausführungsformen der Druck im 1. und im 2. Druckraum auf gleicher Höhe gehalten, nimmt der Konzentrator, d.h. in diesem Fall der flexible, reflektierende Reflektor eine ebene Lage ein. Dabei kann eine an sich filigrane, d.h. verletzliche Membran mit guten Reflexionseigenschaften als Reflektor verwendet werden, da diese durch die Druckzelle geschützt ist. Weiter bleibt der Reflektor im Wesentlichen in seiner Lage, wenn die Druckzelle aufgrund von z.B. Windangriff deformiert wird, da der die beiden Druckräume verbindende Überströmbereich für spontanen Druckausgleich sorgt. Vorteilhafterweise ist der Überströmbereich als Kanal 15 (Figur 1) ausgebildet; er kann aber auch als Öffnung im Reflektor ausgestaltet sein.

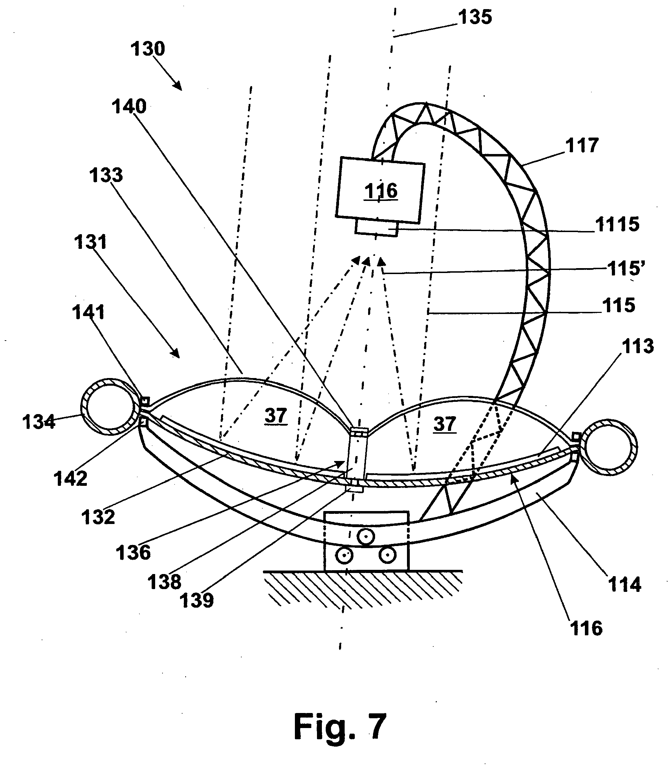

Eine weitere Ausführungsform gemäss den Figuren 7 bis 9 ist ebenfalls geeignet, störendem Windangriff zu widerstehen bzw. eine entsprechend weniger aufwendige Aufhängung für eine Druckzelle zu ermöglichen.

Im Übrigen kann jede Überdruckzone segmentiert sein, um die mechanische Stabilität zu verbessern, insbesondere, wenn eine Konfiguration gemäss Fig. 7 in Rinnenform Verwendung findet.

Die nachstehend beschriebene Ausführungsform insbesondere mit einem Stützring 134 kann wie in den Figuren 7 bis 9 dargestellt oder in Kombination mit einer Ausführungsform gemäss den Figuren 1 bis 6 ausgeführt werden. Mit anderen Worten ist es so, dass z. B. der Stützring 134 an allen Ausführungsformen mit dem entsprechenden Nutzen angeordnet werden kann. Analoges gilt für segmentierte Druckräume bzw. ringraumförmige Ausbildung eines Druckraums; solche Merkmale kann der Fachmann frei nach Notwendigkeit kombinieren, sie sind nicht auf die dargestellten Ausführungsformen eingeschränkt.

Fig. 7 zeigt nun eine bevorzugte Ausführungsform der Erfindung in Gestalt eines Kollektors 130, der im wesentlichen gleich aufgebaut ist wie der Kollektor der vorangehenden Figuren, jedoch auch derartig ausgebildet sein kann, dass die reflektierende Schicht an deren Innenseite einer Aussenwand der Druckzelle vorgesehen ist, wie dies in Fig. 7 zeigt. Modifiziert sind die Ausbildung der Druckzelle 131, bestehend aus einer modifizierten Druckkammerwand 132 und einer modifizierten Druckkammerwand 133, wobei die Druckzelle 131 an einem besonders ausgebildeten Stützring 134 festgelegt ist.

Der hier in Betriebsposition rotationssymmetrisch ausgebildete Druckzelle 131 besitzt die Symmetrieachse 135 (wie erwähnt, könnte aber die Druckzelle anders, z.B. auch rinnenförmig ausgebildet sein). Die Druckkammerwand 133 ist am Ort der Symmetrieachse 135 gegen den die Druckkammerwand 132 eingezogen und über ein Distanzstück 136 am dieser festgelegt, so dass sich eine Überdruckzone in der Art eines Ringraumes 137 ergibt.

Das Distanzstück 136 besteht vorzugsweise aus einem Zylinder 138 mit beidseitig abstehenden Bolzen, die durch eine Öffnung sowohl im in der Wand 132 als auch in der Druckkammerwand 133 hindurchragen und endseitig mit einem Verschlussstück 139,410 derart verbunden sind, dass die jeweiligen Abschnitte des der Wand bzw. in der in der Figur gezeigten Konfiguration des Konzentrators 132 und der Druckkammerwand 133 zwischen Zylinder 138 und Verschlusstück 139,140 fluiddicht festgelegt sind.

Ein Vorteil dieser Anordnung besteht in der geringeren Beanspruchung des Konzentrators 133 bzw. der Druckkammerwand 134 durch die Druckbelastung, was je nach dem einen Konzentrator 133 mit grösserer Reflektionsfläche erlaubt oder eine schwächere Dimensionierung ermöglicht. Der Verlust an reflektierender Fläche ist gegenüber diesen Vorteilen nicht von Bedeutung.

Der peripher umlaufende Stützring 134 kann ebenfalls als aufblasbare Struktur ausgebildet werden; die Konzentratoreinheit 131 ist dann über Klemmringe 141 und 142 mit dem Stürzring 134 fest verbunden, wobei der fest mit dem Rahmenteil 114 verbundene untere Klemmring 142 die Funktion eines Widerlagers einnimmt, das die aus der Konzentratoreinheit 131 und Stützring 134 bestehende steife Anordnung 131,134 trägt. Der obere Klemmring 142 dient der Festlegung der Anordnung 131,134 am Rahmenteil 113.

Die beiden Klemmringe 141,142 sind vorzugsweise miteinander verschraubt, wobei die Schrauben bzw. die entsprechenden Löcher in den übereinanderliegenden Rändern des Konzentrators 132 der Druckkammerwand 133 sowie einem geeigneten Innenflansch des Stützrings 134 durch den Fachmann leicht konzipiert werden können und deshalb zur Entlastung der Figur nicht dargestellt sind.

Der mit adäquat höherem Innendruck versehene Stützring 134 (den der Fachmann leicht bemessen kann) nimmt den wesentlichen Bestandteil der durch den Druck im Ringraum 137 bestehenden radialen, gegen Innen gerichteten Kräfte auf, so dass die Klemmringe 141,142 entsprechend leicht dimensioniert werden können.

Die pneumatische Ausbildung des Stützrings 134 ist nicht an die Ringraumstruktur der Konzentratoreinheit 131 gebunden. Sie kann auch den Stützring 120 (Figur 1) ersetzen. Wie andere vorliegend beschriebene Elemente des Kollektors sind solche Elemente frei kombinierbar, ohne dass der Bereich der Erfindung verlassen wird.

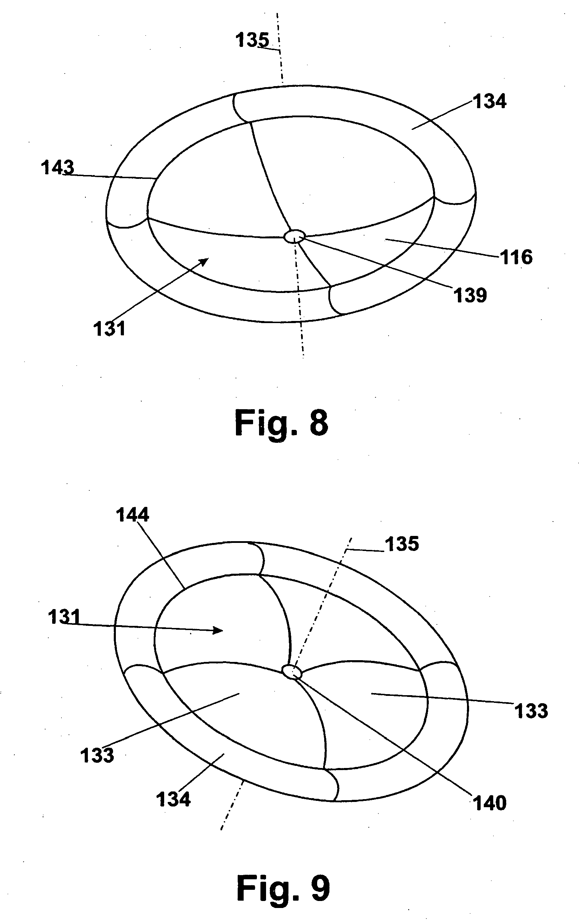

Figur 8 zeigt in räumlicher Ansicht die Konzentratoreinheit 131 von Figur 7 von unten, während Figur 9 eine Ansicht von oben darstellt.

Die Figuren verdeutlichen die gegenseitigen Abmessungen von Druckzelle 131 und pneumatischem Stützring 134. Eine Rinne 143 zeigt den Ort, wo die Anordnung 131,134 auf einen Klemmring 142 aufgelegt und an ihm festgelegt werden kann.

Figur 9 zeigt weiter eine obere Rinne 144 für den Klemmring 142, das Verschlusstück 140 und die Symmetrieachse 135, wobei deutlich die ringraumförmige Struktur der Überdruckzone 137 (Fig. 8) zum Ausdruck kommt.

Wie erwähnt, besitzt die Anordnung 131,134 genügend Steifigkeit, um in einem leichten Rahmen eines Kollektors 120 eingesetzt zu werden und den üblichen Windstärken im Einsatz standzuhalten.

## Patentansprüche

1. Strahlungskollektor (1), mit einer mindestens teilweise aus einer flexiblen Membran (6,7) gebildeten Druckzelle (5), die einen für zu reflektierende Strahlung transparenten Bereich (8) aufweist, **gekennzeichnet durch** einen in der Druckzelle fest angeordneten, eine flexible Membran aufweisenden Reflektor (2), der eine dem transparenten Bereich zugewendete, die Strahlung reflektierende Seite (4) und eine der Strahlung abgewandte Seite (10) aufweist und der die Druckzelle in einen 1. Druckraum (12) und in einen 2. Druckraum (13) teilt, und wobei Mittel (14,15,17,18) vorgesehen sind, welche im Betrieb die Druckräume mit der Aussenwelt verbinden, und die in den Druckräumen betriebsfähig Druck in einem vorbestimmten Bereich zu erzeugen und zu halten, wenn im Betrieb das Volumen eines oder beider Druckräume **durch** äussere Einflüsse verändert wird.

2. Strahlungskollektor nach Anspruch 1, wobei die Mittel eine Verbindung (15) zwischen den Druckräumen und eine Verbindung (14) eines Druckraums mit der Aussenwelt aufweisen, und wobei jede Verbindung eine Fluidpumpe (17, 18) aufweist.

3. Strahlungskollektor nach Anspruch 1 oder 2, wobei der Betriebsdruck im ersten Druckraum vorbestimmt höher ist als im zweiten Druckraum und wobei der vorbestimmte Differenzdruck kleiner ist als 0.5 mbar, vorzugsweise in einem Bereich von 0.05 bis 0.2 mbar, und besonders bevorzugt im Bereich von 0.05 bis 0.1 mbar liegt.

4. Strahlungskollektor nach einem der Ansprüche 3, wobei der Betriebsdruck im 1. Druckraum in einem Bereich von 1 bis 5 mbar, vorzugsweise 2 bis 5 mbar und besonders bevorzugt in einem Bereich von 3 bis 4 mbar liegt.

5. Wannen- oder Rinnenkollektor nach einem der Ansprüche 1 bis 4, wobei die Druckzelle (42) eine kissenförmige Kontur mit rechteckigem Umriss aufweist, die aus einer oberen (40) und einer unteren (41), je flexiblen Membranfläche besteht, deren obere Membranfläche für zu konzentrierende Strahlung transparent ausgebildet ist, wobei der Konzentrator (39) zwischen der oberen und unteren Membranfläche bis hin zur Randzone verlaufend angeordnet ist, derart, dass im Betrieb der erste Druckraum (37) konvex und der zweite Druckraum (36) konkav geformt sind, und wobei die Druckzelle ihrem Randbereich entlang an einem Rahmen (46) aufgehängt ist.

6. Strahlungskollektor nach einem der Ansprüche 1 bis 4, bei welchem die Druckräume im Betrieb mit einem Fluid, vorzugsweise Luft gefüllt sind, wobei die Mittel zur Erzeugung des vorbestimmten Differenzdrucks eine in den ersten Druckraum mündenden ersten Fluidkanal (14) und einen in den zweiten Druckraum mündende zweiten Fluidkanal (15) aufweisen, durch welche Kanäle zur Aufrechterhaltung des Sollbetriebsdrucks Fluid in beide Richtungen fliessen kann, wobei in jedem Fluidkanal eine vorzugsweise als Ventilator ausgebildete Fluidpumpe (17, 18) vorgesehen ist, die derart betrieben werden kann, dass im zugeordneten Druckraum der jeweilige Sollbetriebsdruck herrscht.

7. Strahlungskollektor nach Anspruch 6, wobei die beiden Druckräume durch den zweiten Fluidkanal (15) mit einander verbunden sind.

8. Strahlungskollektor nach einem der Ansprüche 1 bis 4 und 6 bis 7, wobei der zweite Druckraum (67) eine zentral gelegene Kernzone (80) aufweist, und Mittel (81) vorgesehen sind, in der Kernzone betriebsfähig einen pneumatischen Druck aufrecht zu erhalten, der geringer ist als der Druck in den sonstigen Bereichen des zweiten Druckraums, derart, dass im Betrieb der Konzentrator durch parabolisch angenäherte stärkere Krümmung in der Kernzone und schwächere Krümmung in den sonstigen Bereichen die Strahlung verbessert konzentriert.

9. Strahlungskollektor (1,130) nach einem der vorangehenden Ansprüche 1-4 oder 6-8, wobei der Konzentrator (2,132) aus einer Membran, bestehend aus mit PVC, PU und/oder Silikon beschichtetem Polyestergewebe und/oder einer Polyesterfolie vorzugsweise aus Mylar, und/oder Fiberglasgewebe besteht, das auf der einen Seite mit einer Strahlung reflektierenden Beschichtung versehen ist, wobei die reflektierende Schicht vorzugsweise aus Aluminium besteht, die besonders bevorzugt aufgedampft ist.

10. Strahlungskollektor (1,130,) nach einem der vorangehenden Ansprüche 1-4 oder 6-9, wobei die Druckkammerwand (6,133) mindestens teilweise aus Ethylene TetrafluoroEthylene (ETFE) besteht, und vorzugsweise mit hochfestem PET und/oder mit einem Stahl- oder Kunststoffnetz verstärkt ist.

11. Strahlungskollektor (1,130) nach einem der vorangehenden Ansprüche 1-4 oder 6-10, wobei der Kollektor in Betriebsposition rotationssymmetrische Gestalt besitzt und vorzugsweise als Parabolspiegel oder als spiegelnde sphärische Kalotte ausgebildet ist.

12. Strahlungskollektor (1,30) nach Anspruch 11, wobei der Kollektor im Betriebszustand die Form einer Wanne oder Rinne aufweist.

## Claims

1. Radiation collector (1), with an at least partially formed of a flexible membrane (6,7) pressure cell (5), which comprises a material transparent to radiation to be reflected area (8), **characterized by** a fixedly arranged in the pressure cell, a flexible membrane having reflector (2), which facing towards a the transparent region, the radiation reflecting side, and having a radiation Rear facing and dividing the pressure cell in a first pressure chamber (12) and a second pressure chamber (13), and means (14,15,17,18) being provided see-which connect the pressure chambers with the outside world in the operation, and operable in the pressure chambers pressure in a to generate predetermined be-rich and hold when the volume of one or both pressure chambers is altered by external influences during operation.

2. Radiation collector according to claim 1, wherein said means comprise a connection between the pressure chambers, and a connection of a pressure space with the outside world, and wherein each compound comprises a fluid pump.

3. Radiation collector according to claim 1 or 2, wherein the operating pressure in the first pressure chamber is predetermined higher than the second pressure chamber and wherein said predetermined differential pressure is less than 0.5 mbar, preferably in a range of 0.05 to 0.2 mbar, and particularly preferably in the range of 0.05 to 0.1 mbar.

4. Radiation collector according to claim 3, wherein the operating pressure in the first pressure chamber in a range from 1 to 5 mbar, preferably 2-5 mbar and particularly preferably is in a range 3 to 4 mbar.

5. Well or trough collector according to one of claims 1 to 4, wherein the pressure cell comprises a cushion-shaped contour with a rectangular outline, consisting of a top and a bottom, each flexible membrane surface, the upper membrane surface is transparent for the concentrated radiation, wherein the concentrator is arranged to extend between the upper and lower membrane area up to the edge zone, such that convex and the second pressure chamber are concave in the operation of the first pressure chamber, and wherein the pressure cell is suspended its edge region along a frame.

6. Radiation collector according to one of claims 1 to 5, wherein the pressure chambers during operation with a fluid, preferably air filled, wherein the means for generating the predetermined pressure difference having a opening into the first pressure space the first fluid channel and an opening into the second pressure chamber second fluid passage through which channels to maintain the desired operating pressure fluid can flow in both directions, wherein in each fluid channel has a preferably configured as fan fluid pump is provided, which can be operated such that the to-parent pressure chamber prevails the respective desired operating pressure.

7. Radiation collector according to claim 6, wherein the two pressure chambers are connected by the second fluid passage to each other.

8. Radiation collector according to one of claims 1 to 4 and 6 to 7, wherein the second pressure chamber comprises a central core zone, and means are provided, operable to obtain a pneumatic pressure in the core zone is maintained, it is lower than the pressure in other areas of the second pressure chamber, in such a way that the operation of the concentrator, the radiation is concentrated by parabolic improved approximate stronger curvature in the core zone and weaker curvature in other areas.

9. Radiation collector (1,130) according to any one of the preceding claims, wherein the concentrator (2,132) consists of a membrane consisting of PVC, PU and / or silicone coated polyester fabric and / or a polyester film preferably made of mylar, and / or fiberglass fabric is that on the is one side with a radiation reflecting coating, wherein the reflective layer is preferably made of aluminum, which is particularly preferably applied by vapor deposition.

10. Radiation collector (1,130,) according to one of the preceding claims wherein the pressure chamber wall (6,133) consists at least partially of Ethylene Tet rafluoroEthylene (ETFE), and is preferably reinforced with high-strength PET and / or with a steel or plastic mesh.

11. Radiation collector (1,130) according to any one of the preceding claims, wherein the collector has a rotationally symmetrical shape in the operating position and is preferably formed of-as a parabolic mirror or a reflecting spherical dome.

12. Radiation collector (1,30) according to claim 11, wherein the collector has the shape of a trough or channel in the operating state.

## Revendications

1. Collecteur de rayonnement (1), avec une quantité au moins partiellement formée d'une cellule de pression à membrane flexible (6,7), qui comprend un matériau transparent (8) au rayonnement à la zone réfléchie, **caractérisé par** un disposé de façon fixe dans la cellule de pression, un réflecteur (2) membrane souple présentant, qui est tournée vers une région transparente, le rayonnement côté réfléchissant, et ayant un rayonnement arrière en regard et en divisant la cellule de pression dans une première chambre de pression (13) et une seconde chambre de pression (13), et des moyens (14,15,17,18) étant prévus va-et-qui relient les chambres de pression avec le monde extérieur à l'opération, et pouvant fonctionner de la pression des chambres de pression dans un pour générer prédéterminée être riche et maintenir lorsque le volume des chambres un ou deux pression est altérée par des influences extérieures pendant le fonctionnement.

2. Collecteur de rayonnement selon la revendication 1, dans lequel lesdits moyens comprennent une liaison entre les chambres de pression, et une connexion d'un espace de pression avec le monde extérieur, et dans lequel chaque composé comprend une pompe à fluide.

3. Collecteur de rayonnement selon la revendication 1 ou 2, dans lequel la pression de fonctionnement dans la première chambre de pression est prédéterminée plus élevée que la deuxième chambre de pression et dans lequel ladite pression différentielle prédéterminée est inférieure à 0,5 mbar, de préférence dans une plage comprise entre 0,05 et 0,2 mbar, de manière particulièrement préférée dans la plage allant de 0,05 à 0,1 mbar.

4. Collecteur de rayonnement selon la revendication 3, dans lequel la pression de fonctionnement dans la première chambre de pression dans une plage de 1 à 5 mbar, de préférence de 2-5 mbar, et de manière particulièrement préférée est dans une plage de 3 à 4 mbars.

5. Puits ou creux Collecteur selon l'une des revendications 1 à 4, dans lequel la cellule de pression comprend un contour en forme de coussin avec un contour rectangulaire, constitué d'une partie supérieure et une partie inférieure, chaque surface de membrane flexible, la surface de la membrane supérieure est transparente pour le rayonnement concentré, dans lequel le concentrateur est agencé pour s'étendre entre la surface de la membrane supérieure et inférieure jusqu'à la zone de bord, de telle sorte que convexe et la seconde chambre de pression sont concaves dans le fonctionnement de la première chambre de pression, et dans lequel la cellule de pression est suspendu sa zone de bordure le long d'une trame.

6. Collecteur de rayonnement selon l'une des revendications 1 à 5, dans lequel les chambres de pression pendant le fonctionnement avec un fluide, de préférence rempli d'air, dans lequel les moyens pour générer la différence de pression prédéterminée ayant une ouverture dans le premier espace de pression, le premier canal à fluide et une ouverture dans la deuxième chambre de pression de second passage de fluide à travers lequel des canaux pour maintenir le fluide désiré de pression de fonctionnement peut circuler dans les deux sens, dans lequel, dans chaque canal à fluide a une préférence configurée comme pompe à fluide de ventilateur est prévu, qui peut être actionné de telle sorte que la chambre de pression-mère règne la pression de fonctionnement de consigne respective.

7. Collecteur de rayonnement selon la revendication 6, dans lequel les deux chambres de pression sont reliées par le deuxième passage de fluide entre eux.

8. Collecteur de rayonnement selon l'une des revendications 1 à 4 et 6 à 7, dans lequel la seconde chambre de pression comprend une zone de noyau central, et des moyens sont prévus pouvant fonctionner pour obtenir une pression pneumatique dans la zone centrale est maintenue, elle est inférieure à la pression régnant dans les autres zones de la deuxième chambre de pression, de telle sorte que le fonctionnement du concentrateur, le rayonnement est concentré par une courbure parabolique améliorée approximativement plus forte dans la zone centrale et une courbure plus faible dans d'autres domaines.

9. Collecteur de rayonnement (1,130) selon l'une quelconque des revendications précédentes, dans lequel le concentrateur (2132) est constitué d'une membrane constituée de PVC, PU et / ou revêtu de silicone tissu en polyester et / ou un film de polyester de préférence en Mylar et / ou d'un tissu en fibre de verre est celle de la est un côté d'un revêtement réfléchissant le rayonnement, dans lequel la couche réfléchissante est de préférence en aluminium, qui est de manière particulièrement préférée appliquée par dépôt en phase vapeur.

10. Collecteur de rayonnement (1,130), selon l'une quelconque des revendications précédentes, dans lequel la paroi de la chambre de pression (6133) est constitué au moins partiellement d'éthylène Tet rafluoroEthylene (ETFE), et est de préférence renforcé à haute résistance en PET et / ou d'un acier ou d'un treillis en matière plastique.

11. Collecteur de rayonnement (1,130) selon l'une quelconque des revendications précédentes, dans lequel le collecteur a une forme symétrique en rotation dans la position de fonctionnement et est formée de préférence, comme un miroir parabolique ou une calotte sphérique réfléchissante.

12. Collecteur de rayonnement (1,30) selon la revendication 11, dans lequel le collecteur a la forme d'un bac ou d'un canal dans l'état de fonctionnement.
